# EUROPEAN PATENT APPLICATION

(11) **EP 4 737 049 A1**
(43) Date of publication of application: **06.05.2026**
(21) Application number: 24876262.7
(22) Date of filing: 16.08.2024
(51) Int. Cl.: B23K 26/21, B23K 26/70, H01M 50/516, H01M 50/566

(54) **WELDING METHOD AND SYSTEM FOR BATTERY POLES**

(30) Priority: 08.10.2023 CN 202311289456
(71) Applicant: Contemporary Amperex Technology Co., Limited, Ningde, Fujian 352100 (CN)
(72) Inventor: WU, Kai, Ningde, Fujian 352100 (CN); ZHAO, Jun, Ningde, Fujian 352100 (CN); DUAN, Minmin, Ningde, Fujian 352100 (CN); WANG, Wenchong, Ningde, Fujian 352100 (CN); CHEN, Shaolin, Ningde, Fujian 352100 (CN)
(74) Representative: Ran, Handong
(86) International application number: PCT/CN2024/112817
(87) International publication number: WO 2025/077442

(57) **Abstract**

A welding method and system for battery poles, wherein the method is applied to a control device in a welding system. The welding system further comprises a movable welding device (402), and a welding module (4021) and a ranging sensor (4022) which are arranged on the movable welding device (402). The method comprises: acquiring a set of pole coordinates, in a welding station coordinate system, of a plurality of poles of a battery; on the basis of the set of pole coordinates and welding quantity information of a welding module (4021), determining a set of welding coordinates of the welding module (4021); acquiring welding heights corresponding to welding coordinates in the set of welding coordinates, wherein the welding heights are determined on the basis of height distances between a ranging sensor (4022) and poles corresponding to the welding coordinates, which height distances are collected by means of the ranging sensor (4022); and on the basis of the set of welding coordinates and the welding heights corresponding to the welding coordinates, controlling the welding module (4021) to weld the poles of the battery. By means of the welding system, welding quality problems caused by non-uniform heights of poles are reduced, thereby improving the yield of batteries.

## Description

### CROSS-REFERENCE TO RELATED APPLICATIONS

The present disclosure claims priority to Chinese Patent Application 202311289456.X, entitled "WELDING METHOD AND SYSTEM FOR BATTERY TERMINAL POSTS" filed on October 8, 2023, which is incorporated by reference in the present disclosure.

### TECHNICAL FIELD

The embodiments of the present disclosure relate to the technical field of batteries, and relate to but not limited to a welding method and system for battery terminal posts.

### BACKGROUND

New energy batteries are more and more widely used in life and industry, for example, new energy automobiles equipped with batteries have been widely used, and moreover, batteries are increasingly used in the field of energy storage; in a battery production process, a plurality of cells are usually assembled together and connected by busbars to realize connection between electrodes of the cells; and currently, the most common method for welding the busbars to positive and negative terminal posts of the cells is a resistance welding method.

In relevant technology, a traditional three-axis movable welding device with a galvanometric scanner is adopted to weld the battery terminal posts and the busbars, but it has low flexibility during welding, leading to low welding efficiency; and moreover, in a traditional welding technology, the welding is performed with fixed parameters, resulting in welding quality and yield not meeting the welding requirements.

### SUMMARY OF THE INVENTION

The present disclosure provides a welding method and system for battery terminal posts, which can improve the welding efficiency, and moreover, welding parameters can be changed according to the conditions of cell terminal posts, thereby reducing the problems that the welding quality and yield cannot meet the welding requirements.

In a first aspect, the welding method for the battery terminal posts provided by the embodiment of the present application is applied to a control device in a welding system; the welding system further includes a movable welding device, and a welding module and a ranging sensor which are arranged on the movable welding device; the method includes: acquiring a terminal post coordinate set of a plurality of terminal posts of a battery to be welded in a welding station coordinate system; based on the terminal post coordinate set and welding quantity information of the welding module, determining a welding coordinate set of the welding module; acquiring welding heights corresponding to welding coordinates in the welding coordinate set, the welding heights being determined based on height distances, collected by the ranging sensor, from the ranging sensor to the terminal posts corresponding to the welding coordinates; and based on the welding coordinate set and the welding heights corresponding to the welding coordinates, controlling the welding module to weld the terminal posts of the battery.

In the above embodiment, the welding coordinate set for the welding module to perform welding on the cell terminal posts of the battery is determined according to the terminal post coordinate set of the plurality of terminal posts of the battery in the welding station coordinate system and the welding number information of the welding module, the welding height corresponding to each welding coordinate in the welding coordinate set is determined based on the ranging sensor, and the welding module is controlled to weld the terminal posts of the battery according to the welding coordinate set and the welding heights corresponding to the welding coordinates. Therefore, the welding efficiency of the cell terminal posts in welding is improved, and moreover, the welding module is adjusted based on the welding heights, thus the distance from each cell terminal post to a galvanometric scanner is fixed, thereby improving the welding quality.

In some embodiments, the based on the terminal post coordinate set and welding quantity information of the welding module, determining a welding coordinate set of the welding module includes: based on the welding quantity information of the welding module, dividing the plurality of terminal posts of the battery to obtain at least one welding area; and based on the terminal post coordinate set and the terminal posts corresponding to the at least one welding area, determining the welding coordinates corresponding to the at least one welding area, so as to obtain the welding coordinate set of the welding module.

In the above embodiment, the plurality of terminal posts of the battery are divided according to the welding number information of the welding module, and the welding coordinates corresponding to the divided welding areas are determined; and when the welding module performs welding on the terminal posts in the welding areas at the welding coordinates, the distances from the welding module to the terminal posts are the same, thus the welding yield is improved.

In some embodiments, the movable welding device further includes a visual collection system; and the method further includes: acquiring first horizontal distances of a vision center of the visual collection system and a measuring center of the ranging sensor projected to a horizontal plane; and based on the first horizontal distances, controlling the movable welding device to drive the ranging sensor to move to the welding coordinates in the welding coordinate set, so as to collect the corresponding welding heights of the welding module at the welding coordinates by the ranging sensor.

In some embodiments, the based on the first horizontal distances, controlling the movable welding device to drive the ranging sensor to move to the welding coordinates in the welding coordinate set, so as to collect the corresponding welding heights of the welding module at the welding coordinates by the ranging sensor includes: based on the first horizontal distances and the terminal post coordinate set, determining a ranging coordinate set of the movable welding device; controlling the movable welding device to move to the ranging coordinates in the ranging coordinate set, so as to acquire the height distances, collected by the ranging sensor, from the ranging sensor to the terminal posts corresponding to the welding coordinates; and based on the height distances of the terminal posts corresponding to the welding coordinates and a standard welding height, determining the corresponding welding heights of the welding module at the welding coordinates.

In the above embodiment, according to the distance from the visual collection system to the ranging sensor on the movable welding device, the ranging sensor is controlled to determine the distance from the terminal posts corresponding to each welding area to the ranging sensor, and the welding height of the welding module is determined based on this distance; and the welding module is adjusted based on the welding height, making the welding height of each welding area consistent during welding, thereby reducing the welding quality problem caused by uneven heights of the terminal posts, and improving the battery yield.

In some embodiments, the method further includes: acquiring second horizontal distances of a visual center of the visual collection system and a welding center of the welding module projected to a horizontal plane; and correspondingly, the based on the welding coordinate set and the welding heights corresponding to the welding coordinates, controlling the welding module to weld the terminal posts of the battery includes: based on the second horizontal distances, the welding coordinate set of the welding module and the welding heights, controlling the welding module to weld the terminal posts of the battery.

In some embodiments, the based on the second horizontal distances, the welding coordinate set of the welding module and the welding heights, controlling the welding module to weld the terminal posts of the battery includes: based on the second horizontal distances and the welding coordinate set of the welding module, determining the welding coordinate set of the movable welding device; and in response to the movable welding device at the welding coordinates in the welding coordinate set, controlling the welding module of the movable welding device to be located at the welding heights corresponding to the welding coordinates, so as to weld the terminal posts corresponding to the welding coordinates.

In the embodiments, by adjusting the height of the welding module, real-time optimization of the welding parameters is achieved, and the welding quality and yield of the battery are improved.

In some embodiments, the method further includes: acquiring an addressing coordinate set of the plurality of terminal posts of the battery in an addressing station coordinate system, a first mark point coordinate set of at least two mark points of the battery in the addressing station coordinate system and a second mark point coordinate set in the welding station coordinate system; based on the first mark point coordinate set and the second mark point coordinate set, determining a transformation relationship between the addressing station coordinate system and the welding station coordinate system; and based on the transformation relationship and the addressing coordinate set, determining the terminal post coordinate set of the plurality of terminal posts in the welding station coordinate system.

In the embodiments, the parameters of transformation between the addressing station coordinate system and the welding station coordinate system are determined through the first mark point coordinate set of the at least two mark points in the addressing station coordinate system, and the second mark point coordinate set in the welding station coordinate system; the coordinates of the terminal posts in the addressing station coordinate system are transformed into the coordinates of the terminal posts in the welding station coordinate system according to the parameters of transformation, thereby improving the accuracy of the coordinates of the terminal posts in the welding station coordinate system, and improving the welding quality.

In a second aspect, the welding system for the battery terminal posts provided by the embodiment of the present application includes a control device and a movable welding device, and a welding module and a ranging sensor which are arranged on the movable welding device; the control device is configured to acquire a terminal post coordinate set of a plurality of terminal posts of a battery to be welded in a welding station coordinate system; based on the terminal post coordinate set and welding quantity information of the welding module, determine a welding coordinate set of the welding module; acquire welding heights corresponding to welding coordinates in the welding coordinate set, the welding heights being determined based on height distances, collected by the ranging sensor, from the ranging sensor to the terminal posts corresponding to the welding coordinates; and based on the welding coordinate set and the welding heights corresponding to the welding coordinates, control the welding module to weld the terminal posts of the battery; and the movable welding device is configured to receive the welding coordinate set and the welding heights corresponding to the welding coordinates, and weld the terminal posts of the battery.

In the above embodiment, the welding coordinate set for the welding module to perform welding on the cell terminal posts of the battery is determined according to the terminal post coordinate set of the plurality of terminal posts of the battery in the welding station coordinate system and the welding number information of the welding module, the welding height corresponding to each welding coordinate in the welding coordinate set is determined based on the ranging sensor, and the welding module is controlled to weld the terminal posts of the battery according to the welding coordinate set and the welding heights corresponding to the welding coordinates. Therefore, the welding efficiency of the cell terminal posts in welding is improved, and moreover, the welding module is adjusted based on the welding heights, thus the distance from each cell terminal post to a galvanometric scanner is fixed, thereby improving the welding quality.

In some embodiments, the control device is further configured to: based on the welding quantity information of the welding module, divide the plurality of terminal posts of the battery to obtain at least one welding area; and based on the terminal post coordinate set and the terminal posts corresponding to the at least one welding area, determine welding coordinates corresponding to the at least one welding area, so as to obtain the welding coordinate set of the welding module.

In the above embodiment, the control device in the welding system divides the plurality of terminal posts of the battery according to the welding number information of the welding module, and determines the welding coordinates corresponding to the divided welding areas; and when the welding module performs welding on the terminal posts in the welding areas at the welding coordinates, the distances from the welding module to the terminal posts are the same, thus the welding yield is improved.

In some embodiments, the movable welding device further includes a visual collection system; and the control device is configured to acquire first horizontal distances of a vision center of the visual collection system and a measuring center of the ranging sensor projected to a horizontal plane; and based on the first horizontal distances, control the movable welding device to drive the ranging sensor to move to the welding coordinates in the welding coordinate set, so as to collect the corresponding welding heights of the welding module at the welding coordinates by the ranging sensor.

In the above embodiment, according to the distance from the visual collection system to the ranging sensor on the movable welding device, the ranging sensor is controlled by the control device in the welding system to determine the distance from the terminal posts corresponding to each welding area to the ranging sensor, and determine the welding height of the welding module based on this distance; and the welding module is adjusted based on the welding height, making the welding height of each welding area consistent during welding, thereby reducing the welding quality problem caused by uneven heights of the terminal posts, and improving the battery yield.

The above description is only an overview of the technical solution of the present disclosure, and in order to understand more clearly the technical means of the present disclosure, it can be implemented in accordance with the contents of the description, and in order to make the above and other purposes, characteristics and advantages of the present disclosure more obvious and easy to understand, the specific embodiments of the present disclosure are listed below.

### BRIEF DESCRIPTION OF THE DRAWINGS

FIG. 1 is an optional flowchart 1 of a welding method for battery terminal posts provided by an embodiment of the present disclosure;
FIG. 2 is an optional flowchart 2 of a welding method for battery terminal posts provided by an embodiment of the present disclosure;
FIG. 3 is an optional flowchart 3 of a welding method for battery terminal posts provided by an embodiment of the present disclosure;
FIG. 4 is a schematic structural diagram of a welding system for battery terminal posts provided by an embodiment of the present disclosure;
FIG. 5 is a local schematic structural diagram of a movable welding system provided by an embodiment of the present disclosure;
FIG. 6 is a schematic diagram of identifying positioning point coordinates provided by an embodiment of the present disclosure; and
FIG. 7 is a schematic diagram of a welding apparatus for battery terminal posts provided by an embodiment of the present disclosure.

Reference numerals:
401-welding station; 402-movable welding device; 4021-welding module; 4022-ranging sensor; 4023-visual collection system; 601-first image; 602-feature point.

### DETAILED DESCRIPTION

In order to make the objectives, technical solutions and advantages of the present disclosure clearer, the present disclosure will be further elaborated in detail below in combination with the drawings. The described embodiments should not be regarded as limitations to the present disclosure, and all other embodiments obtained by those of ordinary skills in the art without making creative efforts fall within the scope of protection of the present disclosure.

In the following description, "some embodiments" are involved, which describe a subgroup of all possible embodiments, but it is to be understood that "some embodiments" may be the same or different subsets of all possible embodiments and may be combined with each other without conflict. Unless otherwise defined, all technical and scientific terms used in the embodiments of the present disclosure have the same meanings as those commonly understood by those skilled in the art to which the embodiments of the present disclosure belong. The terms used in the embodiments of the present disclosure are only for the purpose of describing the embodiments of the present disclosure and are not intended to limit the present disclosure.

Traditional galvanometric scanner welding systems or collimated focusing welding systems are primarily used for plane welding. First, in a battery composed of a plurality of cells, due to the limitations of battery manufacturing processes, there may be difference in the height of different cell terminal posts; in this case, a multi-axis coordinated working platform is required to cooperate with laser welding, the positioning and fixation of the battery on the multi-axis coordinated working platform will affect the welding accuracy, and moreover, a galvanometric scanner welds one cell terminal post with each movement, which also results in a low welding speed. Furthermore, in traditional welding technologies, the welding is performed with fixed parameters, which causes that the welding quality and yield cannot meet the welding requirements when welding the cell terminal posts of different heights.

In order to solve the problems of low welding efficiency and welding quality not meeting the requirements in the relevant technologies, the applicant discovered in study that the laser galvanometric scanner can weld a plurality of cell terminal posts with each movement, which can improve the welding efficiency. Moreover, a ranging sensor can be arranged on the welding system to determine the height of each cell terminal post; and based on the height of the cell terminal posts, the height of the galvanometric scanner can be adjusted to make the distance from each cell terminal post to the galvanometric scanner fixed, thereby improving the welding quality.

In view of above, in order to solve the problem of welding quality and yield not meeting the welding requirements, the inventor conducted in-depth research and provided a welding system for battery terminal posts; the welding system includes a control device and a movable welding device; a welding module (i.e., the laser galvanometric scanner) and a ranging sensor are arranged on the movable welding device; and a welding probe in the welding module can rotate, allowing the welding module to weld the plurality of cell terminal posts at once.

Based on the above welding system, the inventor discovered that a terminal post coordinate set of the plurality of terminal posts of a battery to be welded in a welding workstation coordinate system can be acquired; according to welding quantity information of the welding module, a welding coordinate set for the welding module to perform welding on the cell terminal posts of the battery is determined; the welding height corresponding to each welding coordinate in the welding coordinate set is determined based on the ranging sensor; and based on the welding coordinate set and the welding heights corresponding to the welding coordinates, the welding module is controlled to weld the terminal posts of the battery. Therefore, the welding efficiency of the cell terminal posts in welding is improved, and moreover, the welding module is adjusted based on the welding heights, thus the distance from each cell terminal post to a galvanometric scanner is fixed, thereby improving the welding quality.

When the welding method provided by the embodiment of the present disclosure is applied to the welding of the terminal posts and busbars, the welded batteries can be used, but are not limited to, in electrical apparatuses such as vehicles, ships, or aircraft. The batteries disclosed by the present disclosure can be used for forming power sources of these electrical apparatuses.

The welding method provided by the embodiment of the present disclosure is applied to the welding system; the system at least includes the control device and the movable welding device, in which, the welding module, the ranging sensor and a visual collection system are arranged on the movable welding device. The control device herein can be any one of a Programmable Logic Controller (PLC), a single chip microcomputer, a middleware controller and an upper computer; the control device can include a processor, and a memory in which processor executable instructions of the processor are stored; and when executed by the processor, the instructions implement the above mentioned welding method for the battery terminal posts. The movable welding device can be a three-axis mechanism (such as a welding robot) which drives the welding module and the ranging sensor to move on a welding station; the welding module can be welding devices such as a laser welding galvanometric scanner; the ranging sensor can be a laser ranging sensor; and the visual collection system can be a charge coupled device (CCD) camera. The relative position relationship among the welding module, the ranging sensor and the visual collection system which are arranged on the movable welding device is unchanged, namely the welding module, the ranging sensor and the visual collection system are fixed on the movable welding device, so that the movement among the welding module, the ranging sensor and the visual collection system is implemented through the movement of the movable welding device. For example, a visual center of the visual collection system overlaps with centers of the terminal posts, and when the ranging sensor is required to measure the distance of the terminal posts, the movable welding device can be controlled to move according to the distance from the visual collection system to the ranging sensor, so as to make the center of the ranging sensor overlap with the centers of the terminal posts, thereby realizing distance measurement for the terminal posts.

In a pre-welding addressing method provided by the embodiment of the present disclosure, the control device in the welding system is treated as an executive body.

The battery in the embodiments of the present disclosure is a battery pack, and contains a plurality of cells which can be connected in series or in parallel or in series-parallel, and the series-parallel connection refers to that the plurality of cells are both connected in series and in parallel. The series connection or the parallel connection or the series-parallel connection of the plurality of battery cells is realized by welding the cell terminal posts and the busbars. Each cell can be a secondary battery or a primary battery, and can also be a lithium-sulfur battery, a sodium-ion battery or a magnesium-ion battery, but not limited thereto. The cells can be in a cylinder shape, a flat body shape, a cuboid shape or other shapes.

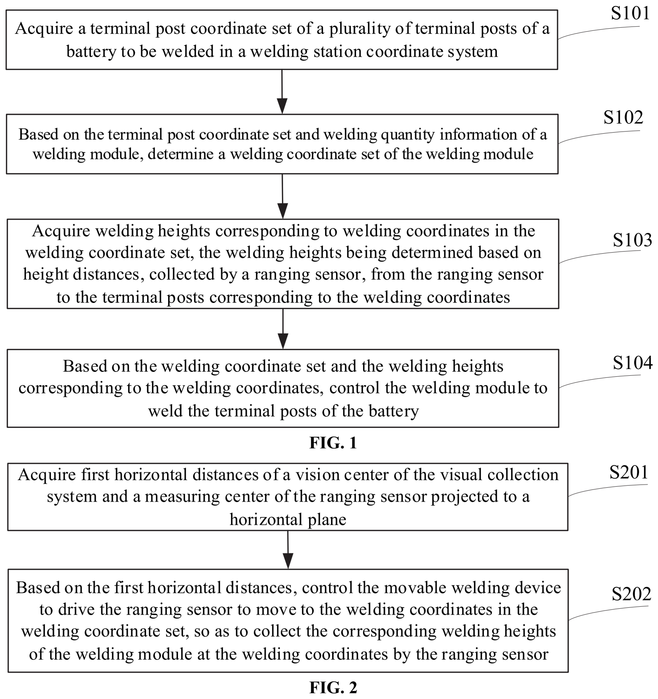

FIG. 1 is an optional flowchart 1 of a welding method for battery terminal posts provided by an embodiment of the present disclosure; as shown in FIG. 1, the welding method provided by the embodiment of the present disclosure can be implemented by steps S101 to S104:
S101: Acquire a terminal post coordinate set of a plurality of terminal posts of a battery to be welded in a welding station coordinate system.

In some embodiments, before the battery enters the welding station, the terminal post addressing of the battery will be carried out at the pre-welding addressing station, so as to obtain the coordinates of the terminal posts and mark points (namely Mark points of the battery) of the battery at the pre-welding addressing station. After the battery addressing is finished, the battery will be moved to the welding station by a transport trolley. At this moment, the coordinate system of the mark points at the welding station is determined based on the visual collection system of the welding system at the welding station, a transformation relationship between the coordinate system of the pre-welding addressing station and the coordinate system of the welding station is determined according to the coordinates of the mark points at the pre-welding addressing station and the welding station, and the coordinates of the terminal post of the battery at the welding station are determined according to the transformation relationship and the coordinates of the terminal posts of the battery at the pre-welding addressing station, so that the terminal post coordinate set of the plurality of terminal posts of the battery to be welded in the welding station coordinate system can be acquired, and the terminal post coordinate set includes the coordinates of each terminal post in the plurality of terminal posts of the battery to be welded.

S102: Based on the terminal post coordinate set and welding quantity information of the welding module, determine a welding coordinate set of the welding module.

In the embodiment of the present disclosure, the welding module can be a laser welding galvanometric scanner, the welding quantity information of the laser welding galvanometric scanner can be the quantity of one-time welding of the galvanometric scanner, for example, if the laser welding galvanometric scanner welds 4 terminal posts at a time, the center of the laser welding galvanometric scanner can be located at the centers of the four terminal posts, the laser welding galvanometric scanner determines a swing angle according to the coordinates of the four terminal posts, and the galvanometric scanner is driven by a motor to rotate according to the swing angle so as to change the path of a laser beam, thereby realizing welding on the 4 terminal posts in sequence.

After acquiring the welding quantity information of the welding module, the coordinate set of the welding module to perform welding on the plurality of terminal posts can be determined according to the terminal post coordinate set of the plurality of terminal posts in the battery and the welding quantity information. For example, if the battery has 200 terminal posts, the welding module welds four terminal posts each time, and the four terminal posts form corner points of a quadrangle, at this moment, the welding module is located in the centers of the four terminal posts when welding the four terminal posts, and the welding coordinates of the welding module in welding the four terminal posts can be computed according to the coordinates of the four terminal posts, thus, all the coordinates of the welding module in welding the battery can be obtained, and then the welding coordinate set is obtained. At this moment, the welding coordinate set has 50 welding coordinates.

In some embodiments, the welding module can further weld 6 or 8 terminal posts at a time; the welding module determines the welding coordinates according to the coordinates of the plurality of terminal posts; the distances from the welding module to all the terminal posts can be the same or different; the welding module determines a plurality of swing angles according to the coordinates of all the terminal posts, and welds the plurality of terminal posts in sequence according to the plurality of swing angles.

S103: Acquire welding heights corresponding to welding coordinates in the welding coordinate set, the welding heights being determined based on height distances, collected by the ranging sensor, from the ranging sensor to the terminal posts corresponding to the welding coordinates.

In some embodiments, the welding heights refer to the heights of the welding module performing welding on the welding station at the welding coordinates, and in order to achieve the yield of each terminal post and reduce the welding quality problem caused by uneven heights of the terminal posts, it is needed to set the distances (namely the standard welding height) from the welding module to the terminal posts during welding to be fixed values.

In some embodiments, the height of the ranging sensor in the welding system is the same as that of the welding module, and the ranging sensor is configured to measure the distance to each terminal post, so as to obtain the distance from the welding module to each terminal post.

In the embodiment of the present disclosure, the welding module can weld four terminal posts at a time, so the welding height of the welding module at each welding coordinate is an average value of the welding heights of the four terminal posts corresponding to the welding coordinates. For example, if the distances from the four terminal posts corresponding to the welding coordinates of the welding module to the ranging sensor are 50, 52, 51 and 49 respectively, the distance from the welding coordinates to the welding module is 50.5; and if the standard welding height is 50, the welding module is required to be lowered by 0.5 when welding at the welding coordinates, and at this moment, the height of the welding module is the welding height of the welding module at the welding coordinates.

S104: Based on the welding coordinate set and the welding heights corresponding to the welding coordinates, control the welding module to weld the terminal posts of the battery.

In some embodiments, in order to improve the welding quality, when the welding module welds the terminal posts, the distance from the welding module to the terminal posts is kept fixed, thus, after the welding height corresponding to each welding coordinate in the welding coordinate set is determined, the height of the welding module can be adjusted according to the welding height, thereby making the distance from the welding module to the terminal posts fixed. For example, when the corresponding welding height of the welding module at the welding coordinates is 50.5 and the distance from the welding module to the terminal posts is 50, the optimal welding quality can be achieved, and at this moment, the welding module can be controlled to be lowered by 0.5 at the welding coordinates, and thus the distance from the welding module to the terminal posts is 50. At the next welding coordinate, adjustment is carried out according to the terminal posts corresponding to the welding coordinates.

In some embodiments, before welding, based on the series or parallel connection relationship of different cells in the battery, the busbars and the terminal posts are fixed according to the series or parallel connection relationship; and after the welding coordinate set of the welding module and the corresponding welding height of the welding module at each welding coordinate are determined, the movable welding device is controlled to drive the welding module to weld the terminal posts in the battery in sequence.

In the embodiments of the present disclosure, the welding coordinate set for the welding module to perform welding on the cell terminal posts of the battery is determined according to the terminal post coordinate set of the plurality of terminal posts of the battery in the welding station coordinate system and the welding number information of the welding module, the welding height corresponding to each welding coordinate in the welding coordinate set is determined based on the ranging sensor, and the welding module is controlled to weld the terminal posts of the battery according to the welding coordinate set and the welding heights corresponding to the welding coordinates. Therefore, the welding efficiency of the cell terminal posts in welding is improved, and moreover, the welding module is adjusted based on the welding heights, thus the distance from each cell terminal post to a galvanometric scanner is fixed, thereby improving the welding quality.

In some embodiments, the welding number information of the welding module refers to the number of the cell terminal posts welded by the welding module each time, for example, 4 cell terminal posts are welded by the welding module each time, the four cell terminal posts form square or rhombus or rectangle or other quadrilateral angular points, and at this moment, the center of the welding module can be located in the center of the quadrangle formed by the four cell terminal posts. Therefore, after the terminal post coordinate set and the welding number information are determined, the coordinates of the center of the welding module in welding can be determined.

In some embodiments, step S102 can be implemented by steps S1 and S2:
S1: Based on the welding quantity information of the welding module, divide the plurality of terminal posts of the battery to obtain at least one welding area.

In some embodiments, after the number information of welding modules is determined, the plurality of terminal posts can be divided according to the arrangement of the plurality of terminal posts on the battery, for example, four adjacent terminal posts that form a quadrangle can be divided into one welding area.

S2: Based on the terminal post coordinate set and the terminal posts corresponding to the at least one welding area, determine welding coordinates corresponding to the at least one welding area, so as to obtain the welding coordinate set of the welding module.

In some embodiments, in each welding area, the coordinates of the welding module can be the center of this area, and coordinates of center points of the four terminal posts can be computed according to the terminal post coordinates of the four terminal posts corresponding to the welding area. The terminal post coordinates herein include X coordinates and Y coordinates of the terminal posts at the welding station, for example, if the coordinates of the four terminal posts of one welding area are (2, 2), (2, 4), (4, 2) and (4, 4) respectively, computing can be performed on the four coordinates to obtain the welding coordinates (3, 3) of the welding area.

In some embodiments, the welding coordinates are arranged in the center of the welding area, thus the distances from the welding modules to the terminal posts can be the same when the welding module welds the terminal posts in the welding area, and the welding yield and the welding quality can be improved during welding. However, according to the embodiment of the present disclosure, the welding position of the welding module in the welding area can be set according to actual requirements, and then the coordinates of the welding positions are computed according to the coordinates of the four terminal posts corresponding to the welding area, and the welding positions are not limited in the embodiments of the present disclosure.

According to the embodiment of the present disclosure, the plurality of terminal posts of the battery are divided according to the welding number information of the welding module, and the welding coordinates corresponding to the divided welding areas are determined; and when the welding module welds the terminal posts in the welding area at the welding coordinates, the distances from the welding module to the terminal posts are the same, so that the welding yield is improved.

In some embodiments, the movable welding device further includes a visual collection system, the visual collection system can be a Charge Coupled Device (CCD) camera, and the distance from a ranging point of the ranging sensor to a visual center of the CCD camera can be determined through the ranging point of the ranging sensor and the visual center of the CCD camera. Therefore, when the visual center of the CCD camera is located at the welding coordinates in the welding coordinate set, the ranging sensor is controlled to move to the welding coordinates according to this distance, so as to measure the heights of the cell terminal posts.

In some embodiments, as shown in FIG. 2, the welding method provided by the embodiment of the present disclosure further includes steps S201 and S202:
S201: Acquire first horizontal distances of a vision center of the visual collection system and a measuring center of the ranging sensor projected to a horizontal plane.

In some embodiments, the ranging sensor can represent a measuring center through the ranging point during ranging, and an image containing the ranging point can be acquired by the visual collection system, so as to determine the first horizontal distance from the visual center of the visual collection system to the measuring center of the ranging sensor; and the first horizontal distance is composed of a distance in an X direction and a distance in a Y direction.

In some embodiments, the first horizontal distance can be obtained based on image identification after the visual collection system acquires the image, and can also be obtained after the visual collection system collects the image containing the ranging point, then transmits the image to the control device of the welding system and the control device identifies the image.

S202: Based on the first horizontal distances, control the movable welding device to drive the ranging sensor to move to the welding coordinates in the welding coordinate set, so as to collect the corresponding welding heights of the welding module at the welding coordinates by the ranging sensor.

In some embodiments, the welding heights refer to the heights of the welding module performing welding on the terminal posts on the welding station at the welding coordinates. In order to guarantee the welding yield of each terminal post and reduce the welding quality problem caused by uneven heights of the terminal posts, it is needed to set the distance (namely the standard welding height) from the welding module to the terminal posts during welding to be a fixed value. At this moment, if the standard welding height is 50, and the distance from the welding module to the terminal posts corresponding to the welding module at the welding coordinates is 49, the welding module is required to move upwards by 1 in a z direction, and at this moment, the height of the welding module at the welding station after moving upwards by 1 is the welding height, and thus the distances from the welding module to the terminal posts are consistent when the welding module welds the plurality of terminal posts.

In the embodiments of the present disclosure, whether the movable welding device reaches a specified coordinate or not is determined by determining whether the visual center of the visual collection system overlaps with the specified coordinates or not. For example, when it is needed to range a certain terminal post, the movable welding device can be controlled to drive the visual collection system to move till the visual center of the visual collection system overlaps with the center of the terminal post, and then the movable welding device moves according to the first horizontal distance from the visual center of the visual collection system to the measuring center of the ranging sensor, so as to make the measuring center of the ranging sensor overlap with the center of the terminal post, and thus the ranging sensor performs ranging on the terminal post.

In the embodiments of the present disclosure, when welding the terminal posts and the busbars, the busbars to be welded are pressed by a pressing plate so as to be fixed to the terminal posts, therefore, when the welding height of the welding module in a certain welding area is determined, the distance from the ranging sensor at the welding coordinates to the pressing plate can be determined as the welding height corresponding to the welding coordinates. At this moment, when the visual collection system reaches the welding coordinate, the movable welding device is moved based on the first horizontal distance to drive the ranging sensor to reach the welding coordinate to measure the distance from the ranging sensor at the welding coordinate to the pressing plate, so as to obtain the welding distance from the welding module at the welding coordinate to the terminal posts.

In some embodiments, the ranging sensor can also be configured to measure the distance from each terminal post in the welding area to the ranging sensor, and each distance is averaged to obtain the corresponding welding height of the welding module at the welding coordinate in the welding area. The movable welding device can be controlled to drive the visual collection system to move till the visual center of the visual collection system overlaps with the terminal post center of one terminal post in the welding area, then the movable welding device is moved based on the first horizontal distance to drive the ranging sensor to reach the terminal post center, the distance from the terminal post to the ranging sensor is measured by the ranging sensor, thus obtaining a first height; the distance from each terminal post in the welding area to the ranging sensor is sequentially determined according to the terminal post coordinates of the terminal posts; and the welding distances from the welding module at the welding coordinate to the terminal posts are computed according to the measured heights of the four terminal posts.

After the welding distances are determined, the corresponding welding height of the welding module at the welding coordinate can be computed according to the standard welding height and the welding distance from the welding module at the welding coordinate to the terminal posts.

In some embodiments, step S202 can be implemented by steps S2021 to S2023:
S2021: Based on the first horizontal distances and the terminal post coordinate set, determine a ranging coordinate set of the movable welding device.

In some embodiments, after the first horizontal distance from the visual center of the visual collection system to the measuring center of the ranging sensor is determined, the visual center of the visual collection system of the movable welding device is controlled to overlap with the terminal post center of the terminal post in the battery according to the terminal post coordinate set of the plurality of terminal posts in the battery; first coordinates of the movable welding device are determined according to the coordinates of the movable welding device at this moment, the first coordinates and the first horizontal distances are computed in the X direction and the Y direction respectively, thus the coordinates of the movable welding device can be determined when the measuring center of the ranging sensor overlaps with the centers of the terminal posts, and then the ranging coordinate set of the movable welding device when the ranging sensor performs ranging on the plurality of terminal posts of the battery can be obtained.

S2022: Control the movable welding device to move to the ranging coordinates in the ranging coordinate set, so as to acquire the height distances, collected by the ranging sensor, from the ranging sensor to the terminal posts corresponding to the welding coordinates.

When the movable welding device is at the ranging coordinates in the ranging coordinate set, the measuring center of the ranging sensor overlaps with the centers of the terminal posts, thus the distance from the terminal posts to the ranging sensor can be measured. The welding coordinates correspond to the four terminal posts, the movable welding device is moved to measure the distances from the four terminal posts to the ranging sensor respectively, and the four distances are averaged to obtain the height distance from the welding module to the terminal posts corresponding to the welding coordinates.

S2023: Based on the height distances of the terminal posts corresponding to the welding coordinates and a standard welding height, determine the corresponding welding heights of the welding module at the welding coordinates.

In the embodiment of the present disclosure, in order to achieve the yield of each terminal post and reduce the welding quality problem caused by uneven heights of the terminal posts, it is needed to set the distance (namely the standard welding height) from the welding module to the terminal posts during welding to be a fixed value. At this moment, if the standard welding height is 50, and the distance from the welding module to the terminal posts corresponding to the welding module at the welding coordinates is 49, the welding module is required to move upwards by 1 in the z direction so that the heights of the welding module in welding the terminal posts can be consistent, and the height of the welding module moving upwards by 1 is determined as the corresponding welding heights of the welding module at the welding coordinates.

In the embodiment of the present disclosure, according to the distance from the visual collection system to the ranging sensor on the movable welding device, the ranging sensor is controlled to determine the distance from the terminal post corresponding to each welding area to the ranging sensor, and determine the welding height of the welding module based on this distance; and the welding module is adjusted based on the welding height, making the welding height of each welding area consistent during welding, thereby reducing the welding quality problem caused by uneven heights of the terminal posts, and improving the battery yield.

In some embodiments, the distance from the welding point of the welding module to the visual center of the visual collection system can also be determined through the welding point of the welding module and the visual center of the visual collection system, so that when the visual center of the CCD camera is located at the welding coordinates in the welding coordinate set, the movable welding device is controlled to drive the welding module to move to the welding coordinates according to the distance, so as to weld the cell terminal posts.

In some embodiments, the welding method provided by the embodiment of the present disclosure further includes a step S3:
S3: Acquire second horizontal distances of a visual center of the visual collection system and a welding center of the welding module projected to a horizontal plane

In some embodiments, a welding point can be formed in a low-power dotting mode by the welding module, and this welding point represents the welding center of the welding module. The image containing the welding point can be collected by the visual collection system, so that the second horizontal distance from the visual center of the visual collection system to the welding center of the welding module can be determined; and the second horizontal distance is composed of a distance in the X direction and a distance in the Y direction.

In some embodiments, the second horizontal distance can be obtained based on image identification after the visual collection system collects the image, and can also be obtained after the visual collection system collects the image containing the welding point and transmits the image to the control device of the welding system and the control device performs identification on the image.

Correspondingly, step S104 can be implemented by a step S4:
S4: Based on the second horizontal distances, the welding coordinate set of the welding module and the welding heights, control the welding module to weld the battery terminal posts.

In some embodiments, when the welding module is required to reach a certain welding coordinate, the movable welding device can be controlled to drive the visual collection system to move until the visual center of the visual collection system overlaps with the welding coordinate, then the movable welding device moves according to the second horizontal distance from the visual center of the visual collection system to the welding center of the welding module, so as to make the welding center of the welding module overlap with the welding coordinate, thus the welding module at the welding coordinate can weld the terminal posts corresponding to the welding coordinate.

In some embodiments, step S4 can be implemented by steps S41 and S42:
S41: Based on the second horizontal distances and the welding coordinate set of the welding module, determine the welding coordinate set of the movable welding device.

In some embodiments, after the second horizontal distance from the visual center of the visual collection system to the welding center of the welding module is determined, the visual center of the visual collection system of movable welding device is controlled to overlap with welding coordinates in the welding coordinate set according to the welding coordinate set, second coordinates of the movable welding device at this moment are determined, the second coordinates and the second horizontal distance are computed in the X direction and the Y direction respectively, so as to determine the coordinates of the movable welding device when the welding center of the welding module overlaps with the welding coordinates, and therefore the welding coordinate set of the movable welding device can be obtained when the welding module performs welding at the welding coordinates.

S42: In response to the movable welding device at the welding coordinates in the welding coordinate set, control the corresponding welding heights of the welding module of the movable welding device at the welding coordinates, so as to weld the terminal posts corresponding to the welding coordinates.

The movable welding device is controlled to move to the welding coordinates in the welding coordinate set, the corresponding welding heights of the welding module of the movable welding device at the welding coordinates are controlled, and thus the four terminal posts corresponding to the welding coordinates are welded.

According to the embodiments of the present disclosure, by adjusting the height of the welding module, real-time optimization of the welding parameters is achieved, and the welding quality and yield of the battery are improved.

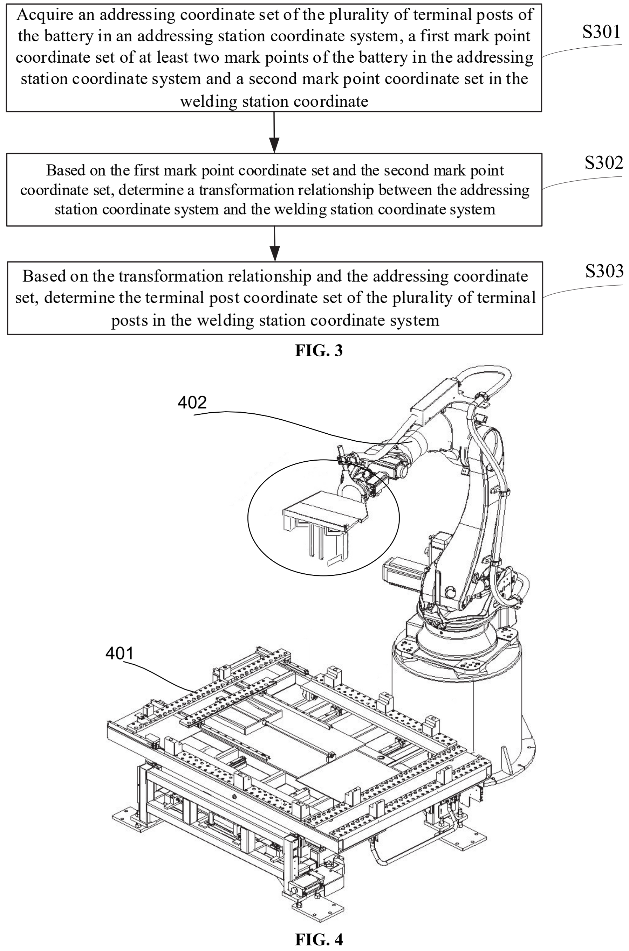

In some embodiments, the terminal post coordinate set of the plurality of terminal posts of the battery in the welding station coordinate system is achieved by transforming the plurality of terminal posts of the battery in the addressing coordinate set of the plurality of the addressing station coordinate system. As shown in FIG. 3, the welding method provided by the embodiment of the present disclosure further includes steps S301 to S303:
S301: Acquire an addressing coordinate set of the plurality of terminal posts of the battery in an addressing station coordinate system, a first mark point coordinate set of at least two mark points of the battery in the addressing station coordinate system and a second mark point coordinate set in the welding station coordinate system.

The pre-welding addressing station can be a station prior to the welding station, and the addressing station coordinate system can be a unified coordinate system constructed for all physical positions in the addressing station. By means of the addressing station coordinate system, visual positions of the plurality of terminal posts of the battery to be welded, and at least two mark points in the pre-welding addressing station can be unified to the same coordinate system.

In some embodiments, the mark point can be a positioning hole (namely the Mark point) in the battery, the battery includes at least two positioning holes, and a first mark point coordinate set of the at least two positioning holes in the addressing station coordinate system and a second mark point coordinate set of the at least two positioning holes in the welding station coordinate system are acquired.

S302: Based on the first mark point coordinate set and the second mark point coordinate set, determine a transformation relationship between the addressing station coordinate system and the welding station coordinate system.

In some embodiments, the addressing station coordinate system and the welding station coordinate system can be in a series of transformation relationships such as translation or rotation, and the transformation relationships can be computed according to the first mark point coordinate set and the second mark point coordinate set.

S303: Based on the transformation relationship and the addressing coordinate set, determine the terminal post coordinate set of the plurality of terminal posts in the welding station coordinate system.

The addressing coordinate set refers to coordinates of the plurality of terminal posts of the battery on the addressing station coordinate system, and the addressing coordinate set can be computed according to the transformation relationships to obtain the terminal post coordinate set of the plurality of terminal posts in the welding station coordinate system.

According to the embodiments of the present disclosure, the parameters of transformation between the addressing station coordinate system and the welding station coordinate system are determined through the first mark point coordinate set of the at least two mark points in the addressing station coordinate system, and the second mark point coordinate set in the welding station coordinate system; the coordinates of the terminal posts in the addressing station coordinate system are transformed into the coordinates of the terminal posts in the welding station coordinate system according to the parameters of transformation, thereby improving the accuracy of the coordinates of the terminal posts in the welding station coordinate system, and improving the welding quality.

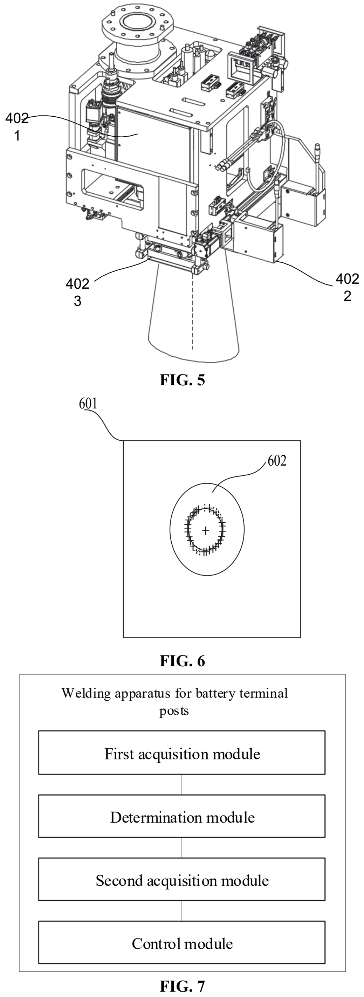

Then, the embodiment of the present disclosure provides a welding system for battery terminal posts; FIG. 4 is a schematic structural diagram of a welding system for battery terminal posts provided by an embodiment of the present disclosure, FIG. 5 is a local schematic structural diagram of a movable welding system provided by an embodiment of the present disclosure, and FIG. 5 is a partial enlarged drawing of an elliptical box of the movable welding device in FIG. 4. As shown in FIG. 4 and FIG. 5, the welding system includes a control device (not shown in the figure) and a movable welding device 402 arranged on a welding station 401, and a welding module 4021 and a ranging sensor 4022 which are arranged on the movable welding device 402. A battery pack to be welded is arranged on the welding station 401, and a battery to be welded is conveyed to the welding station 401 by a transport trolley. The control device is configured to acquire a terminal post coordinate set of a plurality of terminal posts of a battery to be welded in a welding station coordinate system; based on the terminal post coordinate set and welding quantity information of the welding module, determine a welding coordinate set of the welding module; acquire welding heights corresponding to welding coordinates in the welding coordinate set, the welding heights being determined based on height distances, collected by the ranging sensor 4022, from the ranging sensor 4022 and the terminal posts corresponding to the welding coordinates; and based on the welding coordinate set and the welding heights corresponding to the welding coordinates, control the welding module 4021 to weld the terminal posts of the battery; and the movable welding device 402 is configured to receive the welding coordinate set and the welding heights corresponding to the welding coordinates, and weld the terminal posts of the battery.

With reference to FIG. 5, the welding system further includes a visual collection system 4023 arranged on the movable welding device 402; the relative position relationship among the welding module 4021, the ranging sensor 4022 and the visual collection system 4023 which are arranged on the movable welding device 402 is unchanged, namely the welding module 4021, the ranging sensor 4022 and the visual collection system 4023 are fixed on the movable welding device 402, so that the movement among the welding module 4021, the ranging sensor 4022 and the visual collection system 4023 is implemented through the movement of the movable welding device 402, for example, a visual center of the visual collection system 4023 is overlapped with centers of the terminal posts, and when the ranging sensor 4022 is required to range the terminal posts, the movable welding device 402 can be controlled to move according to the distance from the visual collection system 4023 to the ranging sensor 4022, so as to make the center of the ranging sensor 4022 overlap with the centers of the terminal posts, thereby realizing ranging of the terminal posts.

The exemplary application of the embodiment of the present disclosure in a practical application scenario will be described below.

In the embodiment of the present disclosure, the welding system for the battery terminal posts includes a PLC (namely control device) and a robot (namely movable welding device). A laser welding galvanometric scanner (namely welding module), a laser ranging sensor (namely ranging sensor) and a CCD visual camera (namely visual collection system) are arranged on an execution end of the robot; and the laser welding galvanometric scanner, the laser ranging sensor and the CCD vision camera on the execution end of the robot are movable, so that the positions of the laser welding galvanometric scanner, the laser ranging sensor or the CCD visual camera can be changed to realize photographing, ranging and welding for the terminal posts.

The welding method provided by the embodiment of the present disclosure is implemented by steps S10 to S17:
S10: Make the robot arrive at a photographing position on the welding station according to the positioning hole (namely the Mark point) coordinate and a photographing instruction issued by the PLC.
S11: Operate the PLC to trigger the CCD vision camera to photograph the battery on the welding station so as to obtain a first image; after obtaining the image by the camera, utilize a circling tool to capture a position of a feature point (namely the positioning hole (Mark point) of the battery); then utilize a nine-point calibration algorithm of the camera to determine a function relationship between image pixel coordinates on the first image and a robot/workpiece coordinate system; and compute a coordinate value of the current feature point under the robot coordinate system.

FIG. 6 is a schematic diagram of identifying locating point coordinates provided by an embodiment of the present disclosure; as shown in FIG. 6, the camera identifies the first image 601 and determines coordinates (namely central coordinates of the feature point 602) of the feature point 602 (namely the positioning hole); after identification, X and Y coordinates of the feature point 602 will be displayed on the first image 601, the number of the Mark point of the battery and the type of the battery product will also be displayed.

S12: Determine the transformation relationship between the pre-welding station addressing coordinate system and the robot coordinate system through the coordinate value of the feature point coordinates under the robot coordinate system and the terminal post coordinates and the positioning hole coordinates which are obtained by addressing the terminal post on the pre-welding addressing station, so as to compute the terminal post coordinate value of the cell terminal posts at the current welding position (namely the robot coordinate system).

S13: Compute a physical distance from the central point of the camera to the central point of the galvanometric scanner by a laser welding galvanometric scanner low-power dotting manner and a CCD camera photographing manner. The physical distance from the central point of the camera to the ranging point of the laser ranging sensor is computed through the ranging point of the laser ranging sensor and the CCD camera photographing manner.

S14: Compute a coordinate value of the ranging instrument located above the terminal post by the robot, a robot welding coordinate value of the robot during welding and a coordinate value of the galvanometric scanner during welding through the terminal post coordinate value of the terminal post in the robot coordinate system, the physical distance from the center point of the camera to the center point of the galvanometric scanner, and the physical distance from the center of the camera to the ranging point of the laser ranging sensor.

S15: Operate the PLC to issue the robot welding coordinate value to the robot, move a ranging instrument on the robot according to the coordinate value of the ranging instrument located above the terminal post, so as to make the ranging instrument above the terminal post, utilize the PLC to read a numerical value of the laser ranging instrument, perform difference computation on the numerical value and the standard ranging height value (the standard height of the terminal posts) to obtain a height for adjusting of the current galvanometric scanner, namely, if the height of the terminal post is higher than the standard height of the terminal post, adjust the height of the galvanometric scanner according to the difference value to make the distance between the terminal post and the galvanometric scanner to be a fixed value, thereby reducing the problem that the welding quality is poor because of different heights of the terminal posts, and ensuring good welding quality of each terminal post.

S16: Operate PLC to issue a height for welding of the current galvanometric scanner, the welding coordinate of the galvanometric scanner and the coordinates of the robot to the robot, so as to make the robot at the correct welding position and height.

S17: Operate PLC to write the a welding coordinate value for welding of the galvanometric scanner into a galvanometric scanner control device by means of bus communication, and trigger a laser system of the galvanometric scanner to perform a welding operation.

According to the embodiment of the present disclosure, the camera, the galvanometric scanner and the ranging instrument are integrated on the robot, thus flexible welding of the terminal posts is achieved through combination, and the welding efficiency is improved. Moreover, the sensor is highly integrated at the execution end of the robot, thus real-time optimization of welding parameters is achieved, and the welding quality is improved.

Based on the above embodiments, the embodiment of the present disclosure provides a welding apparatus for battery terminal posts, which is applied to a control device in the welding system; FIG. 7 is a schematic diagram of a welding apparatus for battery terminal posts provided by an embodiment of the present disclosure; as shown in FIG. 7, the welding apparatus for the battery terminal posts includes a first acquisition module, a determination module, a second acquisition module and a control module. The first acquisition module is configured to acquire a terminal post coordinate set of a plurality of terminal posts of a battery to be welded in a welding station coordinate system; the determination module is configured to: based on the terminal post coordinate set and welding quantity information of the welding module, determine a welding coordinate set of the welding module; the second acquisition module is configured to acquire welding heights corresponding to welding coordinates in the welding coordinate set, the welding heights being determined based on height distances, collected by the ranging sensor, from the ranging sensor to the terminal posts corresponding to the welding coordinates; and the control module is configured to: based on the welding coordinate set and the welding heights corresponding to the welding coordinates, control the welding module to weld the terminal posts of the battery.

In some embodiments, the determination module is also configured to: based on the welding quantity information of the welding module, divide the plurality of terminal posts of the battery to obtain at least one welding area; and based on the terminal post coordinate set and the terminal posts corresponding to the at least one welding area, determine welding coordinates corresponding to the at least one welding area, so as to obtain the welding coordinate set of the welding module.

In some embodiments, the movable welding device further includes a visual collection system; the apparatus further includes: a third acquisition module, configured to acquire first horizontal distances of a vision center of the visual collection system and a measuring center of the ranging sensor projected to a horizontal plane; and a first control module, configured to: based on the first horizontal distances, control the movable welding device to drive the ranging sensor to move to the welding coordinates in the welding coordinate set, so as to collect the corresponding welding heights of the welding module at the welding coordinates by the ranging sensor.

In some embodiments, the first control module is also configured to: based on the first horizontal distances and the terminal post coordinate set, determine a ranging coordinate set of the movable welding device; control the movable welding device to move to the ranging coordinates in the ranging coordinate set, so as to acquire the height distances, collected by the ranging sensor, from the ranging sensor to the terminal posts corresponding to the welding coordinates; and based on the height distances of the terminal posts corresponding to the welding coordinates and a standard welding height, determine the corresponding welding heights of the welding module at the welding coordinates.

In some embodiments, the apparatus further includes: a fourth acquisition module configured to acquire second horizontal distances of a visual center of the visual collection system and a welding center of the welding module projected to a horizontal plane; and correspondingly, the control module is also configured to: based on the second horizontal distances, the welding coordinate set of the welding module and the welding heights, control the welding module to weld the battery terminal posts.

In some embodiments, the control module is also configured to: based on the second horizontal distances and the welding coordinate set of the welding module, determine the welding coordinate set of the movable welding device; and in response to the movable welding device at the welding coordinates in the welding coordinate set, control the corresponding welding heights of the welding module of the movable welding device at the welding coordinates, so as to weld the terminal posts corresponding to the welding coordinates.

In some embodiments, the apparatus also includes: a fifth acquisition module, configured to acquire an addressing coordinate set of the plurality of terminal posts of the battery in an addressing station coordinate system, a first mark point coordinate set of at least two mark points of the battery in the addressing station coordinate system and a second mark point coordinate set in the welding station coordinate system; based on the first mark point coordinate set and the second mark point coordinate set, determine a transformation relationship between the addressing station coordinate system and the welding station coordinate system; and based on the transformation relationship and the addressing coordinate set, determine the terminal post coordinate set of the plurality of terminal posts in the welding station coordinate system.

It is to be noted that the description of the apparatus in embodiment of the present disclosure is similar to that of the method embodiment mentioned above, and has beneficial effects similar to those of the method embodiment, so it will not be repeated. For technical details not disclosed in this apparatus embodiment, please refer to the description of the method embodiment of the present disclosure for understanding.

The above is only an embodiment of the present disclosure and does not limit the scope of protection of the present disclosure. Any modifications, equivalent replacements, and improvements made within the spirit and scope of the present disclosure are included in the protection scope of the present disclosure.

## Claims

1. A welding method for battery terminal posts, applied to a control device in a welding system, the welding system further comprising a movable welding device, and a welding module and a ranging sensor which are arranged on the movable welding device, the method comprising:
acquiring a terminal post coordinate set of a plurality of terminal posts of a battery to be welded in a welding station coordinate system;
based on the terminal post coordinate set and welding quantity information of the welding module, determining a welding coordinate set of the welding module;
acquiring welding heights corresponding to welding coordinates in the welding coordinate set, the welding heights being determined based on height distances, collected by the ranging sensor, from the ranging sensor to the terminal posts corresponding to the welding coordinates; and
based on the welding coordinate set and the welding heights corresponding to the welding coordinates, controlling the welding module to weld the terminal posts of the battery.

2. The welding method according to claim 1, wherein the based on the terminal post coordinate set and welding quantity information of the welding module, determining a welding coordinate set of the welding module comprises:
based on the welding quantity information of the welding module, dividing the plurality of terminal posts of the battery to obtain at least one welding area; and
based on the terminal post coordinate set and the terminal posts corresponding to the at least one welding area, determining the welding coordinates corresponding to the at least one welding area, so as to obtain the welding coordinate set of the welding module.

3. The welding method according to claim 1 or 2, wherein the movable welding device further comprises a visual collection system, and the welding method further comprises:
acquiring first horizontal distances of a vision center of the visual collection system and a measuring center of the ranging sensor projected to a horizontal plane; and
based on the first horizontal distances, controlling the movable welding device to drive the ranging sensor to move to the welding coordinates in the welding coordinate set, so as to collect the corresponding welding heights of the welding module at the welding coordinates by the ranging sensor.

4. The welding method according to claim 3, wherein the based on the first horizontal distances, controlling the movable welding device to drive the ranging sensor to move to the welding coordinates in the welding coordinate set, so as to collect the corresponding welding heights of the welding module at the welding coordinates by the ranging sensor comprises:
based on the first horizontal distances and the terminal post coordinate set, determining a ranging coordinate set of the movable welding device;
controlling the movable welding device to move to the ranging coordinates in the ranging coordinate set, so as to acquire the height distances, collected by the ranging sensor, from the ranging sensor to the terminal posts corresponding to the welding coordinates; and
based on the height distances and a standard welding height, determining the corresponding welding heights of the welding module at the welding coordinates.

5. The welding method according to any one of claims 1 to 4, wherein:
the movable welding device further comprises a visual collection system; and
the welding method further comprises:
acquiring second horizontal distances of a visual center of the visual collection system and a welding center of the welding module projected to a horizontal plane; and
correspondingly, the based on the welding coordinate set and the welding heights corresponding to the welding coordinates, controlling the welding module to weld the terminal posts of the battery comprises:
based on the second horizontal distances, the welding coordinate set of the welding module and the welding heights, controlling the welding module to weld the terminal posts of the battery.

6. The welding method according to claim 5, wherein the based on the second horizontal distances, the welding coordinate set of the welding module and the welding heights, controlling the welding module to weld the terminal posts of the battery comprises:
based on the second horizontal distances and the welding coordinate set of the welding module, determining the welding coordinate set of the movable welding device; and
in response to the movable welding device being located at the welding coordinates in the welding coordinate set, controlling the welding module of the movable welding device to be located at the welding heights corresponding to the welding coordinates, so as to weld the terminal posts corresponding to the welding coordinates.

7. The welding method according to any one of claims 1 to 6, further comprising:
acquiring an addressing coordinate set of the plurality of terminal posts of the battery in an addressing station coordinate system, a first mark point coordinate set of at least two mark points of the battery in the addressing station coordinate system and a second mark point coordinate set in the welding station coordinate system;
based on the first mark point coordinate set and the second mark point coordinate set, determining a transformation relationship between the addressing station coordinate system and the welding station coordinate system; and
based on the transformation relationship and the addressing coordinate set, determining the terminal post coordinate set of the plurality of terminal posts in the welding station coordinate system.

8. A welding system for battery terminal posts, comprising a control device, a movable welding device, and a welding module and a ranging sensor which are arranged on the movable welding device, wherein:
the control device is configured to:
acquire a terminal post coordinate set of a plurality of terminal posts of a battery to be welded in a welding station coordinate system;
based on the terminal post coordinate set and welding quantity information of the welding module, determine a welding coordinate set of the welding module;
acquire welding heights corresponding to welding coordinates in the welding coordinate set, the welding heights being determined based on height distances, collected by the ranging sensor, from the ranging sensor to the terminal posts corresponding to the welding coordinates; and
based on the welding coordinate set and the welding heights corresponding to the welding coordinates, control the welding module to weld the terminal posts of the battery; and
the movable welding device is configured to receive the welding coordinate set and the welding heights corresponding to the welding coordinates, and weld the terminal posts of the battery.

9. The welding system according to claim 8, wherein the control device is further configured to:
based on the welding quantity information of the welding module, divide the plurality of terminal posts of the battery to obtain at least one welding area; and
based on the terminal post coordinate set and the terminal posts corresponding to the at least one welding area, determine welding coordinates corresponding to the at least one welding area, so as to obtain the welding coordinate set of the welding module.

10. The welding system according to claim 8 or 9, wherein:
the movable welding device further comprises a visual collection system; and
the control device is also configured to:
acquire first horizontal distances of a vision center of the visual collection system and a measuring center of the ranging sensor projected to a horizontal plane; and
based on the first horizontal distances, control the movable welding device to drive the ranging sensor to move to the welding coordinates in the welding coordinate set, so as to collect the corresponding welding heights of the welding module at the welding coordinates by the ranging sensor.

11. The welding system according to claim 10, wherein the control device is also configured to:
based on the first horizontal distances and the terminal post coordinate set, determine a ranging coordinate set of the movable welding device;
control the movable welding device to move to the ranging coordinates in the ranging coordinate set, so as to acquire the height distances, collected by the ranging sensor, from the ranging sensor to the terminal posts corresponding to the welding coordinates; and
based on the height distances and a standard welding height, determine the corresponding welding heights of the welding module at the welding coordinates.

12. The welding system according to any one of claims 8 to 11, wherein:
the movable welding device further comprises a visual collection system; and
the control device is also configured to acquire second horizontal distances of a visual center of the visual collection system and a welding center of the welding module projected to a horizontal plane; and
the control module is also configured to: based on the second horizontal distances, the welding coordinate set of the welding module and the welding heights, control the welding module to weld the battery terminal posts.

13. The welding system according to claim 12, wherein the control device is also configured to:
based on the second horizontal distances and the welding coordinate set of the welding module, determine the welding coordinate set of the movable welding device; and
in response to the movable welding device being located at the welding coordinates in the welding coordinate set, control the corresponding welding heights of the welding module of the movable welding device at the welding coordinates, so as to weld the terminal posts corresponding to the welding coordinates.

14. The welding system according to any one of claims 8 to 13, wherein the control device is also configured to:
acquire an addressing coordinate set of the plurality of terminal posts of the battery in an addressing station coordinate system, a first mark point coordinate set of at least two mark points of the battery in the addressing station coordinate system and a second mark point coordinate set in the welding station coordinate system;
based on the first mark point coordinate set and the second mark point coordinate set, determine a transformation relationship between the addressing station coordinate system and the welding station coordinate system; and
based on the transformation relationship and the addressing coordinate set, determine the terminal post coordinate set of the plurality of terminal posts in the welding station coordinate system.

15. A welding apparatus for battery terminal posts, applied to a control device in a welding system, the welding system further comprising a movable welding device, and a welding module and a ranging sensor which are arranged on the movable welding device, the welding apparatus comprising:
a first acquisition module configured to acquire a terminal post coordinate set of a plurality of terminal posts of a battery to be welded in a welding station coordinate system;
a determination module configured to: based on the terminal post coordinate set and welding quantity information of the welding module, determine a welding coordinate set of the welding module;
a second acquisition module configured to acquire welding heights corresponding to welding coordinates in the welding coordinate set, the welding heights being determined based on height distances, collected by the ranging sensor, from the ranging sensor to the terminal posts corresponding to the welding coordinates; and
a control module configured to: based on the welding coordinate set and the welding heights corresponding to the welding coordinates, control the welding module to weld the terminal posts of the battery.

16. The welding apparatus according to claim 15, wherein the determination module is also configured to:
based on the welding quantity information of the welding module, divide the plurality of terminal posts of the battery to obtain at least one welding area; and
based on the terminal post coordinate set and the terminal posts corresponding to the at least one welding area, determine welding coordinates corresponding to the at least one welding area, so as to obtain the welding coordinate set of the welding module.

17. The welding apparatus according to claim 15 or 16, wherein the movable welding device further comprises a visual collection system, and the welding apparatus further comprises:
a third acquisition module, configured to: acquire first horizontal distances of a vision center of the visual collection system and a measuring center of the ranging sensor projected to a horizontal plane; and
a first control module, configured to: based on the first horizontal distances, control the movable welding device to drive the ranging sensor to move to the welding coordinates in the welding coordinate set, so as to collect the corresponding welding heights of the welding module at the welding coordinates by the ranging sensor.

18. The welding apparatus according to claim 17, wherein the first control module is also configured to:
based on the first horizontal distances and the terminal post coordinate set, determine a ranging coordinate set of the movable welding device;
control the movable welding device to move to the ranging coordinates in the ranging coordinate set, so as to acquire the height distances, collected by the ranging sensor, from the ranging sensor to the terminal posts corresponding to the welding coordinates; and
based on the height distances and a standard welding height, determine the corresponding welding heights of the welding module at the welding coordinates.

19. The welding apparatus according to any one of claims 15 to 18, wherein:
the movable welding device further comprises a visual collection system;
the welding apparatus further comprises a fourth acquisition module configured to acquire second horizontal distances of a visual center of the visual collection system and a welding center of the welding module projected to a horizontal plane; and
correspondingly, the control module is also configured to: based on the second horizontal distances, the welding coordinate set of the welding module and the welding heights, control the welding module to weld the battery terminal posts.

20. The welding apparatus according to claim 19, wherein the control module is also configured to:
based on the second horizontal distances and the welding coordinate set of the welding module, determine the welding coordinate set of the movable welding device; and
in response to the movable welding device being located at the welding coordinates in the welding coordinate set, control the corresponding welding heights of the welding module of the movable welding device at the welding coordinates, so as to weld the terminal posts corresponding to the welding coordinates.
